(19) **Europäisches Patentamt European Patent Office Office européen des brevets**

(11) **EP 2 475 735 B2**

(12) **NOUVEAU FASCICULE DE BREVET EUROPEEN**
Après la procédure d'opposition

(45) Date de publication et mention de la décision concernant l'opposition:
**13.08.2025 Bulletin 2025/33**

(45) Mention de la délivrance du brevet:
**25.05.2016 Bulletin 2016/21**

(21) Numéro de dépôt: **10762990.9**

(22) Date de dépôt: **17.08.2010**

(51) Classification Internationale des Brevets (IPC):
**C09K 5/04** *(2006.01)* **F25B 9/00** *(2006.01)*

(52) Classification Coopérative des Brevets (CPC):
**C09K 5/045;** C09K 2205/126; C09K 2205/22;
F25B 9/006

(86) Numéro de dépôt international:
**PCT/FR2010/051726**

(87) Numéro de publication internationale:
**WO 2011/030027 (17.03.2011 Gazette 2011/11)**

(54) **REFRIGERATION BASSE ET MOYENNE TEMPERATURE**

KÜHLUNG BEI NIEDRIGER UND MITTLERER TEMPERATUR

LOW-TEMPERATURE AND AVERAGE-TEMPERATURE REFRIGERATION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **11.09.2009 FR 0956242**

(43) Date de publication de la demande:
**18.07.2012 Bulletin 2012/29**

(60) Demande divisionnaire:
**16162759.1 / 3 059 292**

(73) Titulaire: **Arkema France
92800 Puteaux (FR)**

(72) Inventeur: **RACHED, Wissam
F-69630 Chaponost (FR)**

(74) Mandataire: **Bandpay & Greuter
11 rue Christophe Colomb
75008 Paris (FR)**

(56) Documents cités:
**FR-A1- 2 256 381          FR-A3- 2 182 956
US-A1- 2006 243 944     US-A1- 2008 314 073**

EP 2 475 735 B2

**Description**

La présente invention concerne l'utilisation des compositions binaire du 2,3,3,3-tetrafluoropropène et du difluorométhane comme fluides de transfert de chaleur.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène pour les systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Par ailleurs, le mélange R-404A constitué de 44 % en poids de pentafluoroéthane, 52 % en poids de trifluoroéthane et 4 % en poids de HFC-134a est largement utilisé comme fluide de réfrigération de grandes surfaces (supermarché) et dans les transports frigorifiques. Ce mélange a toutefois un GWP de 3900.

Le document JP 4110388 décrit l'utilisation des hydrofluoropropènes de formule $C_3H_mF_n$, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2006/094303 divulgue une composition azéotropique contenant 7,4 % en poids du 2,3,3,3 tetrafluoropropène (HFO-1234yf) et 92,6 % en poids du difluorométhane (HFC-32). Ce document divulgue également des compositions quasi-azéotropiques contenant de 1 à 57 % en poids du 2,3,3,3 tetrafluoropropène et de 43 à 99 % en poids du difluorométhane.

US 2008/314073 décrit une méthode de détection de fuite d'une composition de transfert de chaleur dans un circuit fermé muni d'un dispositif pour mesurer la pression interne du système.

FR 2182956 décrit un échangeur de chaleur à contre-courant croisé spécifique.

FR 2256381 décrit un dispositif de transmission de chaleur comportant un ensemble de pompe à chaleur.

Un échangeur de chaleur est un dispositif permettant de transférer de l'énergie thermique d'un fluide vers un autre, sans les mélanger. Le flux thermique traverse la surface d'échange qui sépare les fluides. La plupart du temps on utilise cette méthode pour refroidir ou réchauffer un liquide ou un gaz qu'il est impossible de refroidir ou chauffer directement.

Dans les systèmes à compression, l'échange thermique entre le fluide frigorigène et les sources de chaleur s'effectue par l'intermédiaire des fluides caloporteurs. Ces fluides caloporteurs sont à l'état gazeux (l'air dans l'air conditionné et la réfrigération à détente directe), liquide (l'eau dans les pompes à chaleur domestique, l'eau glycolée) ou diphasique.

Il existe différents modes de transfert :

- les deux fluides sont disposés parallèlement et vont dans le même sens : mode à co-courant (antiméthodique);
- les deux fluides sont disposés parallèlement mais vont dans le sens opposé: mode à contre-courant (méthodique);
- les deux fluides sont positionnés perpendiculairement : mode à courant croisé. Le courant croisé peut être à tendance co-courant ou contre-courant ;
- un des deux fluides fait un demi-tour dans un conduit plus large, que le deuxième fluide traverse. Cette configuration est comparable à un échangeur à co-courant sur la moitié de la longueur, et pour l'autre moitié à un échangeur à contre courant : mode à tête d'épingle .

La demanderesse a maintenant découvert que des compositions binaires du 2,3,3,3-tetrafluoropropène et du difluorométhane sont particulièrement intéressantes comme fluide de transfert de chaleur dans des systèmes à compression pour la réfrigération basse et moyenne température, avec des échangeurs opérant en mode contre-courant ou en mode courant croisé à tendance contre-courant.

Ainsi, ces compositions peuvent être utilisées comme fluide de transfert de chaleur dans la réfrigération des véhicules frigorifiques, dans la conservation des aliments et dans l'industrie ( chimique, alimentaire etc ) avec des échangeurs en mode contre-courant ou en mode courant croisé à tendance contre-courant.

Un premier objet de la présente invention concerne l'utilisation des compositions binaires contenant essentiellement de 61 à 85 % en poids de 2,3,3,3-tetrafluoropropène et de 15 à 39 % en poids de difluorométhane comme fluide de transfert de chaleur dans des systèmes à compression pour la réfrigération basse et moyenne température, avec des échangeurs opérant en mode contre-courant ou en mode courant croisé à tendance contre-courant.

On entend par réfrigération basse et moyenne température, l'intervalle de - 45°C à -10°C à l'évaporateur.

Avantageusement, les compositions binaires contiennent essentiellement de 70 à 79 % en poids du 2,3,3,3 tetrafluoropropène et de 21 à 30 % en poids du difluorométhane.

Les compositions binaires utilisées dans la présente invention ont à la fois un ODP nul et un faible GWP.. Le coefficient de performance (COP: le rapport entre la puissance froide et la consommation électrique d'un refrigerateur) de ces compositions binaires dans des échangeurs en mode à contre-courant, est plus élevée que les compositions utilisées actuellement en réfrigération basse et moyenne température. Compte-tenu du niveau de pression au condenseur, il n'est pas nécessaire de développer de nouveaux compresseurs ; les compresseurs existant sur le marché peuvent convenir.

Les compositions binaires utilisées dans la présente invention peuvent remplacer le R-404A et R-407C (mélange ternaire contenant 52 % en poids du HFC-134a, 25 % en poids du pentafluoroethane et 23 % en poids de difluoromethane) dans des systèmes de transfert de chaleur à compression avec échangeurs opérant en mode contre-courant ou en mode courant croisé à tendance contre-courant.

Les compositions binaires mises en oeuvre selon la présente invention peuvent être stabilisées. La quantité de stabilisant représente de préférence au plus 5 % en poids par rapport à la composition binaire.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Un deuxième objet de la présente invention concerne un procédé de transfert de chaleur dans des systèmes à compression pour la réfrigération, basse et moyenne température, dans lequel on utilise les compositions binaires contenant essentiellement de 61 à 85 % en poids de 2,3,3,3 tetrafluoropropène et de 15 à 39 % en poids de difluorométhane, telles que définies ci-dessus, comme fluide frigorigène avec des échangeurs opérant en mode contre-courant ou en mode courant croisé à tendance contre-courant.

Le procédé selon la présente invention peut être mis en oeuvre en présence des lubrifiants tels que l'huile minérale, alkylbenzène, le polyalkylène glycol, polyol ester et le polyvinyl éther.

PARTIE EXPERIMENTALE

**Outils de calcul**

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont:
Température d'ébullition, Température et pression critique, la courbe de pression en fonction de la température à partir du point d'ébullition jusqu'au point critique, les densités liquide saturée et vapeur saturée en fonction de la température.

*HFC-32:*

Les données sur HFC-32 sont publiées dans l'ASHRAE Handbook 2005 chapitre 20, et sont aussi disponible sous Refrop (Logiciel développé par NIST pour le calcul des propriétés des fluides frigorigènes)

*HFO-1234yf:*

Les données de la courbe température-pression du HFO-1234yf sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

*Coefficient d'interaction binaire du HFC-32 / HFO-1234yf:*

L'équation RK-Soave utilise des coefficients d'interaction binaire pour représenter le comportement des produits en mélanges. Les coefficients sont calculés en fonction des données expérimentales d'équilibre liquide vapeur. La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesll) en phase gazeuse utilisant un catharomètre (TCD).

Les mesures d'équilibre liquide vapeur sur le binaire HFC-32 / HFO-1234yf sont réalisées pour les isothermes suivantes : -10°C, 30°C et 70°C

## Système à compression

Considérons un système à compression équipé d'un évaporateur et condenseur à contre-courant, d'un compresseur à vis et d'un détendeur.

Le système fonctionne avec 15°C de surchauffe et 5°C de sous refroidissement. L'écart de température minimum entre le fluide secondaire et le fluide frigorigène est considéré de l'ordre de 5°C.

Le rendement isentropique des compresseurs est fonction du taux de compression. Ce rendement est calculé suivant l'équation suivante:

$$\eta_{isen} = a - b(\tau - c)^2 - \frac{d}{\tau - e} \tag{1}$$

Pour un compresseur à vis, les constantes a, b, c, d et e de l'équation (1) du rendement isentropique sont calculées suivant les données types publiées dans le Handbook "Handbook of air conditioning and refrigeration, page 11.52".

Le coefficient de performance (COP) est défini, comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit:

(Les températures T sont en K)

$$T_{moyenne}^{condenseur} = T_{entrée}^{condenseur} - T_{sortie}^{condenseur} \tag{2}$$

$$T_{moyenne}^{évaporateur} = T_{sortie}^{évaporateur} - T_{entrée}^{évaporateur} \tag{3}$$

Le COP de Lorenz dans le cas de l'air conditionnée et réfrigération:

$$COPlorenz = \frac{T_{moyenne}^{évaporateur}}{T_{moyenne}^{condenseur} - T_{moyenne}^{évaporateur}} \tag{4}$$

Le COP de Lorenz dans le cas de chauffage:

$$COPlorenz = \frac{T_{moyenne}^{condenseur}}{T_{moyenne}^{condenseur} - T_{moyenne}^{évaporateur}} \tag{5}$$

Pour chaque composition, le coefficient de performance du cycle de Lorenz est calculé en fonction des températures correspondantes

Le %COP/COPLorenz est le rapport du COP du système par rapport au COP du cycle de Lorenz correspondant.

Résultats mode réfrigération basse température

En mode basse température, le système à compression fonctionne entre une température d'entrée du fluide frigorigène à l'évaporateur de -30°C et une température d'entrée du fluide frigorigène au condenseur de 40°C. Le système fournit du froid à -25°C.

Les performances des compositions selon l'invention dans les conditions de fonctionnement basse température sont données dans le Tableau 1. Les valeurs des constituants (HFO-1234yf, HFC-32) pour chaque composition sont données en pourcentage en poids.

Tableau 1

| HFO-1234yf | HFC-32 | Temp sortie évap (°C) | Temp sortie comp (°C) | T sortie cond (°C) | évap P (bar) | cond P (bar) | Taux (p/p) | Glide | rendement comp | % COP / COPLorenz |
|---|---|---|---|---|---|---|---|---|---|---|
| R404A | | -30 | 100 | 40 | 2,1 | 18,1 | 8,8 | 0,45 | 53,8 | 31,8 |
| 80 | 20 | -25 | 102 | 32 | 1,7 | 13,8 | 8,2 | 4,98 | 58,4 | 39,3 |
| 79 | 21 | -25 | 102 | 32 | 1,7 | 14,0 | 8,2 | 5,06 | 58,7 | 39,6 |
| 78 | 22 | -25 | 103 | 32 | 1,7 | 14,2 | 8,1 | 5,13 | 59,0 | 39,8 |
| 77 | 23 | -25 | 103 | 32 | 1,8 | 14,4 | 8,1 | 5,19 | 59,2 | 40,0 |
| 76 | 24 | -25 | 104 | 32 | 1,8 | 14,6 | 8,1 | 5,23 | 59,4 | 40,1 |
| 75 | 25 | -25 | 104 | 33 | 1,8 | 14,8 | 8,1 | 5,25 | 59,6 | 40,3 |
| 74 | 26 | -25 | 105 | 33 | 1,9 | 15,0 | 8,0 | 5,26 | 59,7 | 40,4 |
| 73 | 27 | -25 | 106 | 33 | 1,9 | 15,2 | 8,0 | 5,26 | 59,8 | 40,4 |
| 72 | 28 | -25 | 107 | 33 | 1,9 | 15,4 | 8,0 | 5,24 | 59,9 | 40,5 |
| 71 | 29 | -25 | 108 | 33 | 2,0 | 15,6 | 8,0 | 5,21 | 60,0 | 40,5 |
| 70 | 30 | -25 | 108 | 33 | 2,0 | 15,8 | 8,0 | 5,17 | 60,0 | 40,5 |
| 65 | 35 | -25 | 114 | 34 | 2,1 | 16,8 | 8,0 | 4,84 | 59,8 | 40,3 |
| 61 | 39 | -26 | 118 | 34 | 2,2 | 17,6 | 8,1 | 4,45 | 59,3 | 40,0 |

Résultats mode réfrigération moyenne température

En mode moyenne température, le système à compression fonctionne entre une température d'entrée du fluide frigorigène à l'évaporateur de -15°C et une température d'entrée du fluide frigorigène au condenseur de 35°C. Le système fournit du froid à -10°C.

Les performances des compositions binaires dans les conditions de fonctionnement moyenne température sont données dans le Tableau 2. Les valeurs des constituants (HFO-1234yf, HFC-32) pour chaque composition sont données en pourcentage en poids.

Tableau 2

| | | Temp sortie évap (°C) | Temp sortie comp (°C) | T sortie cond (°C) | évap P (bar) | cond P (bar) | Taux (p'/p) | Glide | rendement comp | % COP / COPLorenz |
|---|---|---|---|---|---|---|---|---|---|---|
| R404A | | -15 | 62 | 35 | 3,7 | 16,0 | 4,4 | 0,46 | 79,9 | 54,9 |
| HFO-1234yf | HFC-32 | | | | | | | | | |
| 80 | 20 | -9 | 64 | 27 | 3,2 | 12,2 | 3,8 | 6,11 | 81,3 | 61,9 |
| 79 | 21 | -9 | 64 | 27 | 3,2 | 12,3 | 3,8 | 6,16 | 81,3 | 62,0 |
| 78 | 22 | -9 | 65 | 27 | 3,3 | 12,5 | 3,8 | 6,19 | 81,3 | 62,0 |
| 77 | 23 | -9 | 65 | 27 | 3,3 | 12,7 | 3,8 | 6,20 | 81,3 | 61,9 |
| 76 | 24 | -9 | 66 | 27 | 3,4 | 12,9 | 3,8 | 6,20 | 81,3 | 61,9 |
| 75 | 25 | -9 | 66 | 27 | 3,4 | 13,0 | 3,8 | 6,18 | 81,3 | 61,9 |
| 73 | 27 | -9 | 67 | 28 | 3,5 | 13,4 | 3,8 | 6,10 | 81,3 | 61,8 |
| 72 | 28 | -9 | 68 | 28 | 3,5 | 13,6 | 3,8 | 6,05 | 81,3 | 61,8 |
| 71 | 29 | -9 | 69 | 28 | 3,6 | 13,7 | 3,8 | 5,98 | 81,3 | 61,7 |
| 70 | 30 | -9 | 69 | 28 | 3,6 | 13,9 | 3,8 | 5,90 | 81,3 | 61,6 |

## Revendications

1. Utilisation d'une composition binaire contenant essentiellement de 61 à 85 % en poids de 2,3,3,3-tétrafluoropropène et de 15 à 39 % en poids de difluorométhane, comme fluide de transfert de chaleur dans des systèmes de réfrigération à compression, basse et moyenne température, avec des échangeurs opérant en mode contre-courant ou en mode courant croisé à tendance contre-courant.

2. Utilisation selon la revendication 1 **caractérisée en ce que** la composition contient essentiellement de 70 à 79 % en poids du 2,3,3,3-tétrafluoropropène et de 21 à 30 % en poids du difluorométhane.

3. Procédé de transfert de chaleur dans lequel on utilise une composition binaire contenant essentiellement de 61 à 85 % en poids de 2,3,3,3-tétrafluoropropène et de 15 à 39 % en poids de difluorométhane, comme fluide frigorigène dans des systèmes de réfrigération à compression, basse et moyenne température, avec des échangeurs opérant en mode contre-courant ou en mode courant croisé à tendance contre-courant.

4. Procédé selon la revendication 3 **caractérisé en ce que** la composition contient essentiellement de 70 à 79 % en poids du 2,3,3,3-tétrafluoropropène et de 21 à 30 % en poids du difluorométhane.

5. Procédé selon la revendication 3 à 4 **caractérisé en ce que** la composition binaire est stabilisée.

6. Procédé selon l'une quelconque des revendications 3 à 6 **caractérisé en ce qu'**il est mis en oeuvre en présence d'un lubrifiant.

## Patentansprüche

1. Verwendung einer binären Zusammensetzung, die im Wesentlichen 61 bis 85 Gew.-% 2,3,3,3-Tetrafluorpropen und 15 bis 39 Gew.-% Difluormethan enthält, als Wärmeübertragungsfluid in Tief- und Mittel-temperatur-Kompressionskälteanlagen mit Austauschern im Gegenstrom-Modus oder im Querstrom-Modus mit Gegenstrom-Tendenz.

2. Verwendung nach Anspruch 1, **dadurch gekennzeichnet, dass** die Zusammensetzung im Wesentlichen 70 bis 79 Gew.-% 2,3,3,3-Tetrafluorpropen und 21 bis 30 Gew.-% Difluormethan enthält.

3. Verfahren zur Übertragung von Wärme, bei dem man eine binäre Zusammensetzung, die im Wesentlichen 61 bis 85 Gew.-% 2,3,3,3-Tetrafluorpropen und 15 bis 39 Gew.-% Difluormethan enthält, als Kältemittel in Tief- und Mittel-temperatur-Kompressionskälteanlagen mit Austauschern im Gegenstrom-Modus oder im Querstrom-Modus mit Gegenstrom-Tendenz verwendet.

4. Verfahren nach Anspruch 3, **dadurch gekennzeichnet, dass** die Zusammensetzung im Wesentlichen 70 bis 79 Gew.-% 2,3,3,3-Tetrafluorpropen und 21 bis 30 Gew.-% Difluormethan enthält.

5. Verfahren nach Anspruch 3 bis 4, **dadurch gekennzeichnet, dass** die binäre Zusammensetzung stabilisiert ist.

6. Verfahren nach einem der Ansprüche 3 bis 6, **dadurch gekennzeichnet, dass** es in Gegenwart eines Schmiermittels durchgeführt wird.


**Claims**

1. Use of a binary composition containing essentially from 61 to 85 wt.% of 2,3,3,3-tetrafluoropropene and from 15 to 39 wt.% of difluoromethane as heat transfer fluid in compression-type, low- and medium-temperature refrigeration systems, with exchangers operating in countercurrent mode or in cross-current mode with countercurrent tendency.

2. Use according to Claim 1, **characterized in that** the composition contains essentially from 70 to 79 wt.% of 2,3,3,3-tetrafluoropropene and from 21 to 30 wt.% of difluoromethane.

3. Method of heat transfer in which a binary composition containing essentially from 61 to 85 wt.% of 2,3,3,3-tetrafluoropropene and from 15 to 39 wt.% of difluoromethane is used as refrigerant in compression-type low- and medium-temperature refrigeration systems, with exchangers operating in countercurrent mode or in cross-current mode with countercurrent tendency.

4. Method according to Claim 3, **characterized in that** the composition contains essentially from 70 to 79 wt.% of 2,3,3,3-tetrafluoropropene and from 21 to 30 wt.% of difluoromethane.

5. Method according to Claims 3 to 4, **characterized in that** the binary composition is stabilized.

6. Method according to any one of Claims 3 to 6, **characterized in that** it is implemented in the presence of a lubricant.

**RÉFÉRENCES CITÉES DANS LA DESCRIPTION**

**Documents brevets cités dans la description**

- JP 4110388 B
- WO 2004037913 A
- WO 2006094303 A
- US 2008314073 A
- FR 2182956
- FR 2256381

**Littérature non-brevet citée dans la description**

- l'ASHRAE Handbook. 2005, vol. 20